# EUROPÄISCHE PATENTSCHRIFT

(11) **EP 0 637 728 B1**
(45) Veröffentlichungstag und Bekanntmachung des Hinweises auf die Patenterteilung: **04.03.1998**
(21) Anmeldenummer: 94111524.8
(22) Anmeldetag: 23.07.1994
(51) Int. Cl.: F41H 7/02

(54) **Belüftungssystem für den Mannschaftsraum eines Kampffahrzeuges**
Ventilation system for the crew compartment of a military vehicle
Système de ventilation pour le poste d'equipage d'un véhicule militaire

(30) Priorität: 04.08.1993 AT 1559/93
(43) Veröffentlichungstag der Anmeldung: 08.02.1995
(73) Patentinhaber: STEYR-DAIMLER-PUCH AKTIENGESELLSCHAFT, 1010 Wien (AT)
(72) Erfinder: Skoff, Gerhard, Dipl.-Ing., A-1130 Wien (AT)

(56) Entgegenhaltungen:
- DE-C- 4 136 207
- US-A- 2 853 153
- US-I- T 986 006

## Beschreibung

Die Erfindung handelt von einem System zur Belüftung des Mannschaftsraumes eines Kampffahrzeuges mit einem vom Mannschaftsraum getrenntem Motorraum, in dem sich ein Kühler mit saugendem Kühlgebläse befindet.

Bei Kampffahrzeugen ist die Belüftung des Mannschaftsraumes in mehrfacher Hinsicht schwierig: Die von aussen mittels eines Ventilators zugeführte Luft muß mechanisch und chemisch (sie kann Spuren von Kampfgasen enthalten) gereinigt werden, was einen erheblichen Druckabfall verursacht; sie muß im Inneren des Mannschaftsraumes gezielt verteilt werden, wozu meist Luftführungskanäle (etwa zum Fahrer) erforderlich sind. Die auf engem Raum untergebrachte Mannschaft hat einen erheblichen Luftbedarf, ausserdem kann bei Grenadierfahrzeugen auch aus dem Mannschaftsraum geschossen werden, daher ist ein hoher Luftdurchsatz erforderlich. Sie muß schließlich den Mannschaftraum auch wieder verlassen, sowohl bei offenem als auch bei geschlossenem Kampfraum, was bei ABC-dichten Fahrzeugen eine besondere Schwierigkeit darstellt.

Kein bekanntes System genügt allen Anforderungen: Systeme mit Absauggebläse brauchen für ausreichende Luftzufuhr eine enorme Gebläseleistung und können keinen zu den einzelnen Verbrauchern gerichteten Luftstrom erzeugen; zudem kann nur bei dichtem Mannschaftsraum durch ein Filter hindurch angesaugt werden. Auch bei Belüftung durch Druckgebläse ist die Gebläseleistung noch so hoch, daß ein Radialgebläse verwendet werden muß, das sehr viel von dem knappen Innenraum beansprucht. Wenn der Kampfraum geschlossen ist, muß eine Auslassöffnung vorhanden sein, die auch wieder verschließbar sein muß. Systeme mit Druckgebläse und Sauggebläse genügen den Anforderungen noch am ehesten, sie erfordern aber zwei Gebläse, was hohe Kosten, eine aufwendige Steuerung und Bauraumverlust bedingt.

Aus der US 2,853,153 A ist ein Kampffahrzeug bekannt, dessen in einem getrennten Raum untergebrachter Motor seine Verbrennungsluft durch eine sehr aufwendige Filteranlage wahlweise entweder aus dem Mannschaftsraum oder aus dem Motorraum ansaugt. Dabei wird jedoch ungereinigte Luft aus der Umgebung in den Mannschaftsraum gesogen, was eine offene Luke erfordert und keine individuelle Zuteilung der Luft erlaubt. Die Filteranlage weist einen Grobabscheider auf, das Kühlgebläse des Motors saugt die von ihr aufgefangenen Grobteilchen ab.

Es ist daher Ziel der Erfindung, ein Belüftungssystem zu schaffen, das die genannten Mängel vermeidet und bei geringem technischen Aufwand allen Anforderungen genügt.

Erfindungsgemäß wird das dadurch erreicht, daß das System aus einer Aussenluft ansaugenden Luftansaug- und Reinigungsvorrichtung mit einem Ventilator, einem Luftverteilkanal und Ausblasöffnungen im Mannschaftsraum, und aus einer in Abhängigkeit vom Druck im Motorraum verschließbaren Durchtrittsöffnung zwischen dem Mannschaftsraum und dem Motorraum besteht. Dabei wird von der Tatsache Gebrauch gemacht, daß im Motorraum bereits ein sehr starkes saugendes Kühlgebläse verwendet wird, um die Kühlung des Motors sicherzustellen, wodurch im Motorraum ein erheblicher Unterdruck herrscht. Dieser Unterdruck saugt verbrauchte Luft aus dem Mannschaftsraum ab und senkt den Druck in diesem ab. Das Gebläse ist in der Regel thermostatisch gesteuert, sodaß bei höherer thermischer Belastung auch die Belüftung des Mannschaftsraumes verstärkt wird. Dadurch ist es möglich, am Lufteintritt in den Mannschaftsraum, an dem auch die Luftreinigung stattfindet, mit einem Ventilator von geringer Druckhöhe das Auslangen zu finden. Bei geöffnetem Fahrzeug kann dieser Ventilator sogar ganz abgestellt werden, der Unterdruck im Motorraum reicht auch zum Absaugen von Pulvergasen, die beim Feuern aus dem Mannschaftsraum frei werden.

Besonders wenig Bauraum wird gebraucht, wenn der Ventilator ein Axialventilator ist. Das ist erst durch den erfindungsbedingt niederen erforderlichen Förderdruck möglich.

In einer bevorzugten Ausgestaltung des Lüftungssystemes schließt an die Durchtrittsöffnung ein Schalldämpfer an. Dadurch wird der im Motorraum herrschende Lärm von der Mannschaft ferngehalten.

In einer bevorzugten Weiterbildung ist zum Verschließen der Durchtrittsöffnung eine Klappe vorgesehen, die sich bei Überdruck im Motorraum und bei Abstellen des Motors selbsttätig schließt. Das schützt die Mannschaft sowohl im Fall einer Explosion im Motorraum als auch bei Stillstand des Motors vor dem Eindringen von Motorgasen.

Im folgenden wird die Erfindung anhand von Abbildungen einer bevorzugten Ausführungsform erläutert. Es zeigen:
- Figur 1:: Ein Kampffahrzeug mit dem erfindungsgemäßen System stark vereinfacht,
- Figur 2:: Einen Vertikalschnitt nach II-II In Fig.1.

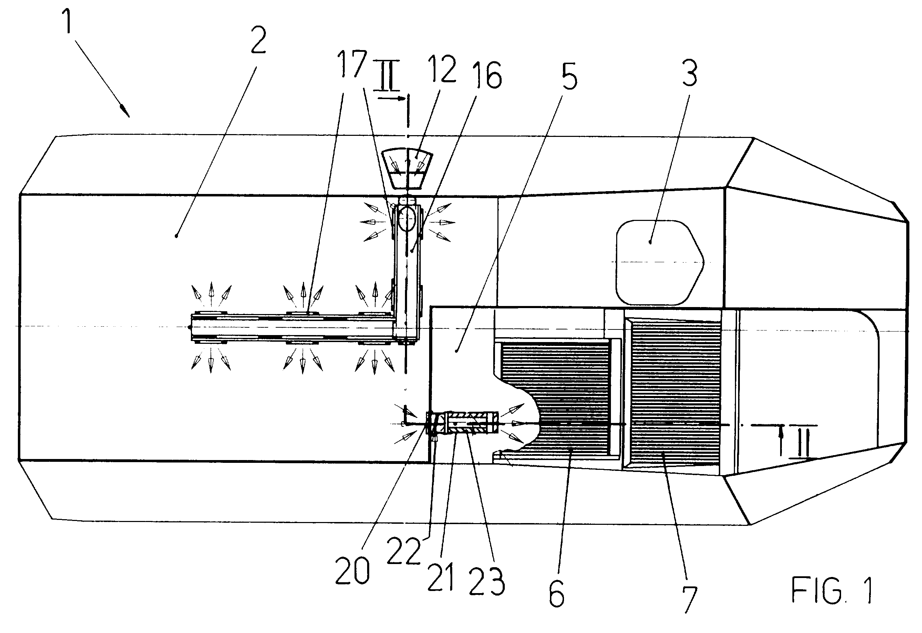

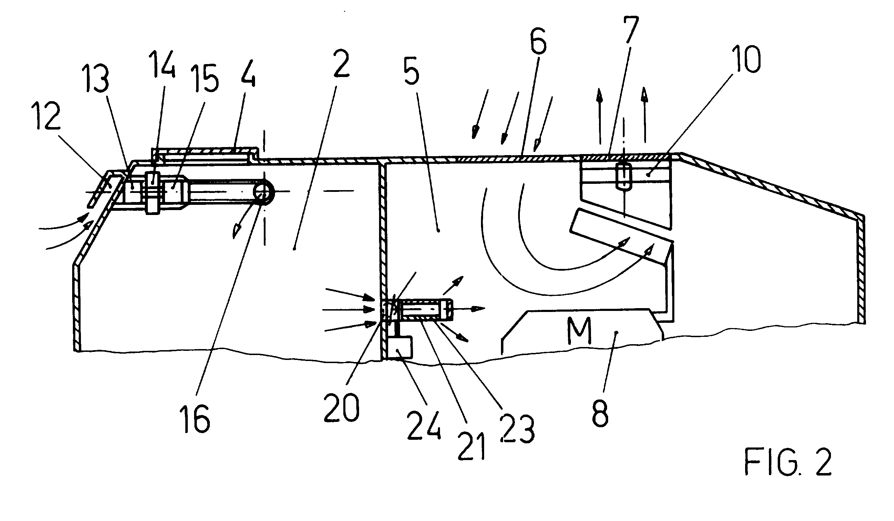

In den Figuren 1 und 2 ist der Körper 1 eines Schützenpanzers nur in groben Konturen angedeutet. In seinem Inneren befindet sich ein Mannschaftsraum 2, der nach vorne bis zum Fahrersitz 3 reicht, und der oben mittels Deckeln 4 dicht verschließbar ist.

Neben dem Fahrersitz 3 befindet sich der vom Mannschaftsraum 2 vollkommen getrennte Motorraum 5, der außen am Luftzufuhrgrill 6 und am Luftabfuhrgrill 7 erkennbar ist. In dessen Innerem befindet sich ein nur angedeuteter und beispielsweise wassergekühlter Motor 8, ein damit verbundener Kühler 9 und ein Kühlgebläse 10. Dieses Kühlgebläse ist sehr stark und großzügig dimensioniert. Durch die Drosselwirkung des Luftzufuhrgrilles 6 entsteht daher im Motorraum 5 ein Unterdruck. Bei einem luftgekühlten Motor wäre ein analoges Gebläse vorhanden.

An der Außenwand des Körpers 1 ist eine Luftansaughutze 12 angebracht, von der die Luft über ein Grobfilter 13, ein Gebläse 14 und ein chemisches Filter 15 in den Luftverteilungskanal 16 geleitet wird, von dem aus diverse Luftausblasdüsen 17 an geeigneten Stellen im Mannschaftsraum Frischluft ausgeblasen wird.

Zwischen Mannschaftsraum 2 und Motorraum 5 ist nun eine Durchtrittsöffnung 20 vorhanden, an die ein Rohrstutzen 21 anschließt, der ein von einer Steuereinrichtung 24 betätigtes Klappenventil 22 und einen Schalldämpfer 23 enthält.

Die Arbeitsweise ist die folgende: wenn das Klappenventil 22 geöffnet ist, wird durch den Unterdruck im Motorraum 5 verbrauchte Luft aus dem Mannschaftsraum 2 abgesaugt. Dadurch werden bei geöffneten Deckeln 4 eventuelle Pulvergase aus dem Mannschaftsraum 2 entfernt, gegebenenfalls sogar ohne den Frischluftventilator 14 einzuschalten. Bei geschlossenen Deckeln 4 bewirkt der Unterdruck im Motorraum 5 auch eine Absenkung des Druckes im Mannschaftsraum 2, die den Ventilator 14 unterstützt. Das bedeutet, daß er nicht den gesamten Druckabfall in den Luftfiltern 13,15 und im Luftverteilungskanal 16 mit Ausblasdüsen 17 decken muß. Das wiederum bedeutet, daß der Ventilator 14 nur für eine relativ geringe Förderhöhe ausgelegt sein muß, es kann somit ein Axialventilator verwendet werden. Axialventilatoren zeichnen sich durch geringen Raumbedarf (kurze Baulänge in Strömungsrichtung) und großen Luftdurchsatz aus, ihre Förderhöhe ist jedoch beschränkt.

Der an die Durchtrittsöffnung 20 anschließende Rohrstutzen 21 enthält schließlich noch einen Schalldämpfer 23, damit der Lärm des Motorraumes nicht in den Mannschaftsraum 2 dringen kann. Das Klappenventil 22 wird von dem Steuerorgan 24 geschlossen, wenn der Motor abgestellt wird oder der Luftdruck im Motorraum ansteigt. Das Klappenventil 22 könnte aber auch als Rückschlagventil oder als sonstiges Sicherheitsventil ausgebildet sein, das sich bei Druckanstieg im Motorraum selbsttätig schließt.

## Patentansprüche

1. System zur Belüftung des Mannschaftsraumes eines Kampffahrzeuges mit einem vom Mannschaftsraum (2) getrenntem Motorraum (5), in dem sich ein Kühler (9) mit saugendem Kühlgebläse (10) befindet, **dadurch gekennzeichnet**, daß das System besteht aus:
a) einer Aussenluft ansaugenden Luftansaug- und Reinigungsvorrichtung (12,13,15) mit einem Ventilator (14), einem Luftverteilkanal (16) und Ausblasöffnungen (17) im Mannschaftsraum, und
b) einer in Abhängigkeit vom Druck im Motorraum verschließbaren Durchtrittsöffnung (20) zwischen dem Mannschaftsraum (2) und dem Motorraum (5).

2. Belüftungssystem nach Anspruch 1 **dadurch gekennzeichnet**, daß der Ventilator (14) ein Axialventilator ist.

3. Belüftungssystem nach Anspruch 1 **dadurch gekennzeichnet,** daß an die Durchtrittsöffnung (20) ein Schalldämpfer (23) anschließt.

4. Belüftungssystem nach Anspruch 1 **dadurch gekennzeichnet**, daß zum Verschließen der Durchtrittsöffnung (20) eine Klappe (22) vorgesehen ist, die sich bei Überdruck im Motorraum (5) und bei Abstellen des Motors (8) selbsttätig schließt.

## Claims

1. Ventilation system for the crew-compartment of an armoured vehicle with an engine-compartment (5) separate from the crew-compartment (2), wherein a cooler (9) and a suction fan (10) are lodged, **caracterized** in that the system consists of:
a) an air intake and cleaning device (12,13,15) aspirating ambient air comprizing a ventilator (14), an air distribution duct (16) and discharge nozzles (17) in the crew-compartment, and
b) a passage (20) between the crew-compartment (2) and the engine compartment (5) closable depending on the pressure in the engine-compartment.

2. Ventilation system according to claim 1, **caracterized** in that the ventilator (14) is an axial flow ventilator.

3. Ventilation system according to claim 1, **caracterized** in that the passage (20) is followed by a silencer (23).

4. Ventilation system according to claim 1, **caracterized** in that a gate (22) is provided for closing the passage (20), which closes automatically in case of overpressure in the engine-compartment (5) and when the engine (8) is stopped.

## Revendications

1. Système de ventilation du poste d'èquipage d'un véhicule de combat dont le compartiment-moteur (5) est séparé du poste d'équipage (2) et contient un refroidisseur (9) avec un ventilateur extracteur de refroisiddement (10), **caractérisé** en ce que le système comporte:
a) un dispositif d'aspiration et de nettoyage d'air (12,13,15) aspirant l'air ambiant comportant un ventilateur (14), un canal de distribution (16) et des buses soufflantes (17) dans le poste d'èquipage, et
b) une ouverture de passage (20) entre le poste d'èquipage (2) et le compartiment-moteur (5) obturée en fonction de la pression dans le compartiment-moteur (5).

2. Système de ventilation selon la revendication 1, **caractérisé** en ce que le ventilateur (14) est un ventilateur axial.

3. Système de ventilation selon la revendication 1, **caractérisé** en ce que le passage (20) est suivi d'un silencieux (23).

4. Système de ventilation selon la revendication 1, **caractérisé** en ce que un clapet (22) est prévu dans le but d'obturer automatiquement l'ouverture de passage (20) en cas de surpression dans le compartiment-moteur (5) et lorsque le moteur (8) est coupé.
